Europäisches Patentamt

European Patent Office

Office européen des brevets

(11) Publication number: 0 330 147
A2

# (12) EUROPEAN PATENT APPLICATION

(21) Application number: 89103000.9

(51) Int. Cl.4: G01C 23/00

(22) Date of filing: 21.02.89

(30) Priority: 24.02.88 US 160059

(43) Date of publication of application:
30.08.89 Bulletin 89/35

(84) Designated Contracting States:
DE ES FR GB IT NL SE

(71) Applicant: UNITED TECHNOLOGIES
CORPORATION
United Technologies Building 1, Financial
Plaza
Hartford, CT 06101(US)

(72) Inventor: Harper, Howard Phillips
325 Navajo Loop
Huntington, CT 06484(US)
Inventor: Hamilton, Bruce E.
28088 Wildwind Road
Canyon County, CA 91531(US)
Inventor: Stiles, Lorren
12 Old Roxbury Road
Roxbury, CT 06783(US)
Inventor: Spero, Robert Eliot
201B South Trail
Stratford, CT 06497(US)
Inventor: Kass, Robert Craig
139 East 33rd Street P.O. Box 146
New York New York 10016(US)

(74) Representative: Klunker . Schmitt-Nilson .
Hirsch
Winzererstrasse 106
D-8000 München 40(DE)

(54) Aircraft helmet pointing angle display symbology.

(57) A helmet mounted display system provide images to a pilot in an aircraft cockpit by sensing the attitude of the pilot's helmet with respect to the aircraft or cockpit and retrieving stored signals indicative of points within the cockpit which are within the field of view of the pilot for display of symbolic images of the cockpit points such that the symbolic images coincide, from the pilot's point of view, with the cockpit points.

## FIG.7

## Aircraft Helmet Pointing Angle Display Symbology

The invention described herein may employ some of the teachings disclosed and claimed in commonly owned copending applications filed on even date herewith by Harper et al, (Attorney Docket No. S-3924), entitled AIRCRAFT WAYPOINT DISPLAY SYMBOLOGY; by Kass et al (Attorney Docket No.: S-4067) entitled AIRCRAFT ALTITUDE DISPLAY SYMBOLOGY; by Stiles et al, (Attorney Docket No. S-4068), entitled AIRCRAFT TORQUE DISPLAY SYMBOLOGY; by Hamilton et al, (Attorney Docket No. S-4069) entitled AIRCRAFT VELOCITY/ACCELERATION DISPLAY SYMBOLOGY; by Spero et al, and (Attorney Docket No. S-4170), entitled CONTACT-ANALOG HEADUP DISPLAY METHOD AND APPARATUS.

The invention relates to the presentation of various aircraft operating parameters and mission information to the pilot, via a display system.

Modern high-performance aircraft require the monitoring of a tremendous amount of sensor data indicative of both airframe and engine operating parameters simply to remain aloft. Much of the sensor data is combined and analyzed by various automated flight systems, such as a Flight Management System, a Flight Director, an Autopilot, a Stability Augmentation System, and/or an Electronic Engine Control System to control certain operating parameters at preset limits, to pilot-selected values, or within safety thresholds. The ultimate effect of these systems is typically "transparent" to the pilot and pilot workload is reduced. Nevertheless, it is still vital that many parameters are presented via a display to the pilot so that he is cognizant not only of present operating conditions, but also of available "reserves" within the flight envelope of the aircraft.

In the context of a military aircraft, a plethora of weapons status and flight mission data must also be presented to the pilot.

One can readily appreciate the need to present data to the pilot in as succinct, unobtrusive, and meaningful manner as possible, especially in the context of a single pilot aircraft.

To this end, it has been known to combine data and present only the combined result to the pilot in the form of "symbology", or a pictorial representation, rather than in digital or analog scale form. The latter is exemplified in U. S. Patent No. 4,368,517 (Lovering, 1983).

Besides console mounted displays, heads-up and helmet-mounted displays are becoming more used for displaying data and symbology. Both heads-up and helmet-mounted displays present information, typically via collimated light rays to the pilot's eye or eyes via a semi-transparent display so that he can perceive both the imaged information and the view out of the cockpit simultaneously without having to lower his head or accommodate his eyes. U.S. Patent 4,305,057 (Rolston, 1981) illustrates the heads-up type and U. S. Patent Nos. 3,923,370 (Mostrom, 1975), 4, 269,476 (Gauthier, et al, 1981), and 4,446,480 & 4,439,157 (Breglia, et al, 1984) are exemplary of helmet mounted display systems.

Despite the advances that have been made in the area of helmet-mounted display symbology (see for instance, U. S. Army publication TM 55-1520-238-10, relating to the Apache Helicopter, at pages 4-19 through 4-23) there still exists a need for improvement and room for innovation.

It is an object of this invention to provide an improved symbology for use in a display system.

According to a first aspect of the invention, an image of an altitude symbol (30) is provided to a pilot by means of a display device (22) in response to a sensed altitude signal. The altitude symbol comprises a larger isosceles triangle (34) and a smaller isosceles triangle (36) sharing its base with the larger isosceles triangle. The position of the triangles within a rectangular area (32) on the display device corresponds to the aircraft altitude. Portions of the triangles which may, according to the altitude, fall outside of the rectangular area are occluded.

A line and a digital display of altitude may appear across the rectangular area. Portions of the triangle in the regions of the line and digital display are occluded.

This display will allow the pilot to acquire altitude information more quickly and with less cognitive processing than is currently required. This display concept will allow the pilot to readily perceive a gross approximation of the aircraft altitude by merely glancing at this display and seeing how "high" the aircraft is compared to known height yardsticks (e.g., triangles) which might instead be superimposed over the real-world view. The display provides a better means of information transfer using only peripheral cueing. The precise altitude is also provided via the digital display.

The triangle symbols could be designed to display alternate altitudes, such a 0, 25, 50 and 100 units, depending on mission suitability.

According to a second aspect of the invention, an image of a power symbol (50) is provided to a pilot by means of a display device (22) in response to at least two sensed torque signals. The power symbol comprises a vertical line (56) which serves as a scale, and arrowheads (58, 60) disposed on either side of the scale at a position indicative of the engine torque of two engines. The arrowheads may only be displayed when there is a threshold torque split between the two engines, or when the torque on any single engine goes out of range. A digital display of average torque may be included in a box at the bottom of the scale.

For helicopters, a solid triangle symbol (62) may be displayed along the scale to indicate power required to hover out of ground effect.

A horizontal line symbol (64) may be displayed along the scale to indicate the maximum power available from the engines altogether.

For helicopters, a thicker vertical line symbol (66) may be superimposed upon the scale to indicate the instantaneous estimated power setting as a function of the pilot's collective stick input. For fixed wing aircraft, this might indicate a cockpit torque command.

According to a third aspect of the invention, images of navigational symbols are provided to a pilot by means of a display device (22) in response to sensed navigational signals. A horizon line symbol (72) is provided in such a way that it coincides, from the perspective of the aircraft or pilot, with the horizon. A rectangular box symbol (70) is provided above the horizon line at a position indicative of the location of the current mission waypoint, and a digital display (76) of the current waypoint number or the distance thereto may be presented in the box. A line (74) extends from the box down across the horizon line to a point (78) below the horizon line and is suggestive of the distance of the aircraft from the current waypoint. The line (74) may be imaged such that its position on the horizon corresponds to the bearing to the current waypoint from the perspective of the aircraft or pilot. The point (78) may terminate such that its image coincides, from the perspective of the aircraft or pilot, with the actual location of the waypoint on the earth. Another symbol (80), indicative of the position of a subsequent mission waypoint may also be presented.

A symbol (84) may be provided at a position relative to the current waypoint symbol (70) indicative of the direction which the pilot may steer to return via a smooth path to the mission leg which will take him to the current waypoint.

This display will allow the pilot to acquire flight plan (navigational) information as well as heading/steering command cues more quickly and with less cognitive processing than is currently required. This display concept will allow the pilot to readily perceive the location of the waypoints due to their superimposition over the real-world view providing a better means of information transfer.

In accordance with a fourth aspect of the invention, an image of an azimuth tape symbol (90) may be provided indicative of the real world azimuth of the pilot's view out of the cockpit.

An image of another symbol (112) may be presented, in accord with a fifth aspect of the invention, in response to sensed signals indicative of the position of the pilot's head with respect to the cockpit, the symbol (112) being indicative of cockpit structures so that the pilot is cognizant of his orientation within the cockpit under night flying conditions in which imagery from image sensors is also provided to the pilot.

According to a sixth aspect of the present invention, in response to sensed signals indicative of aircraft heading, velocity and acceleration, a symbol (120) may be presented to provide horizontal velocity information to the pilot. A velocity vector symbol takes the form of a line emanating from a circular symbol and has a length magnitude proportional to the magnitude of the sensed velocity. The direction of the vector relative to the vertical axis of the display indicates the direction of the vehicle velocity relative to its longitudinal axis. The acceleration of the aircraft is indicated grossly by the rate of change of the velocity vector itself. However, it is also indicated by the form of an arrowhead at the other end of the velocity vector. As the rate of change of velocity increases the arrowhead points away from the central circular symbol. Diminishing velocity is indicated by the opposite direction of the arrowhead. A constant velocity is indicated by a flat acceleration cue (making the velocity vector arrowhead appear as a "T"). A box can be provided around the central circular symbol in order to quantitatively indicate a selected number of knots from which the magnitude of velocity can be estimated. A decision may be made to only indicate the box when the velocity is less than a selected number of knots, e.g., 10 knots so that it does not become a distraction while traveling at greater rates of speed where an exact magnitude is of no concern.

These and other objects, features and advantages of the present invention will become more apparent in light of the following detailed description of an embodiment thereof, as illustrated in the accompanying drawing.

Brief Description of the Drawing

Fig 1 is a block diagram of an aircraft display system;

Fig. 2 is a pictorial representation of altitude display symbology, according to the first aspect of this invention;

Fig. 3 is a pictorial representation of power display symbology, according to the second aspect of this invention;

Fig. 4 is a pictorial representation of waypoint and steering cue display symbology, according to the third aspect of this invention;

Fig. 5 is a pictorial representation of heading display symbology, according to the fourth aspect of this invention;

Fig. 6 is a pictorial representation of cockpit structure display symbology, according to the fifth aspect of this invention;

Fig. 7 is a pictorial representation of the displays of Figs. 2-5 as they might (aggregately) appear to a pilot using a display system of the helmet mounted type;

Fig. 8 is an illustration of angular relations between a flight plan leg and an aircraft off-course;

Fig. 9 is an illustration of several paths flown by an off-course aircraft from various positions back on-course, according to the present invention;

Fig. 10 is an illustration of a prior art velocity/acceleration symbol;

Figs.11A-11C illustrates a velocity/acceleration symbol, according to the present invention; and

Fig. 12 illustrates a velocity/acceleration symbol, according to the present invention for three cases of acceleration.

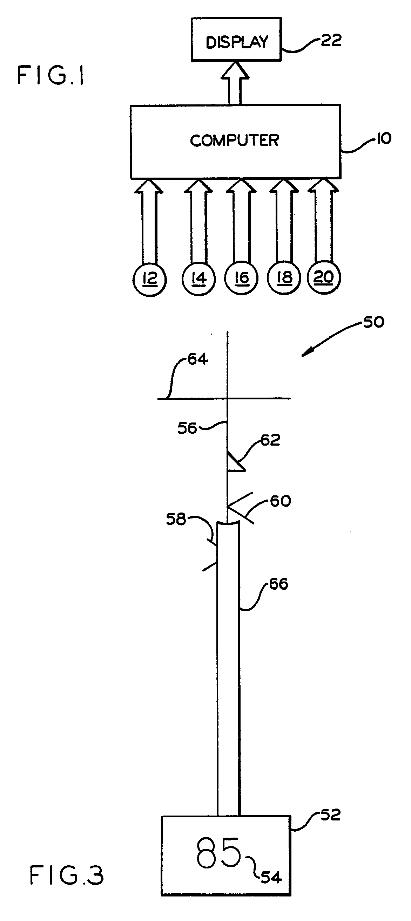

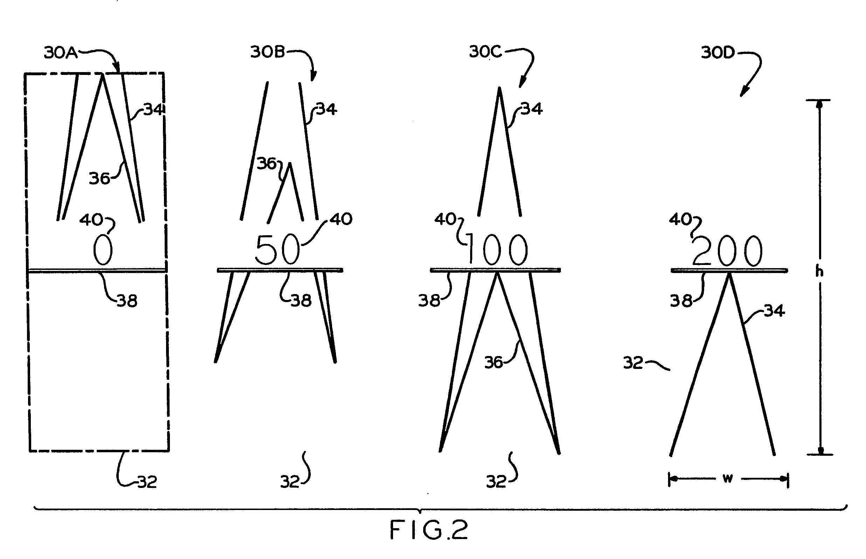

Fig. 1 shows an aircraft computer 10 receiving signals from various airframe sensors 12 (such as position, heading, attitude, and altitude), engine sensors 14 (such as torque), control sensors 16 (such as cyclic/collective pitch and yaw), helmet attitude and position sensors 18, and input devices 20 (such as devices for entering flight plan information). In a manner that is generally within the scope of one of ordinary skill in the art, the computer 10 generates output signals that appear as digital data, analog data, and/or symbology for providing images thereof to the pilot on a display system (22) such as, without limitation, a heads-up display or a helmet mounted display. Figs. 2-7 are illustrative of various symbolic images as they may appear to a pilot on a display, according to the present invention.

## ALTITUDE SYMBOLS

Fig. 2 shows four examples of an altitude symbol for display as symbolic altitude images in response to sensing four discrete altitudes by means of, e.g., a radar altimeter (sensor 12 of Fig. 1). the four examples are labeled 30A, 30B, 30C and 30D and are herein generally referred to by the numeral 30.

The altitude display 30 is presented within a discrete rectangular area 32 (shown in phantom) of height h and width w on the viewing screen of a display system such as a heads-up or a helmet-mounted display system type. With reference to the example 30C, two isosceles triangles, a larger triangle 34 and a smaller triangle 36 are presented within the area 32. The larger triangle 34 has a height h and a base width w, and shares its base (which may or may not actually be visible on the display) with the smaller triangle 36 which has a height/2 and a base width of w. A fixed location line 38 appears horizontally (in all instances) across the area 32 at h/2, or at the apex of the smaller triangle 36 as shown in the example 30C. A digital display 40 of altitude appears just above the line 38.

The two triangles 34 and 36 move, in unison, up and down within the area 32 in response to altitude changes and, as may be readily noted in the examples 30a, 30B and 30D, the portionof the triangles 34,36 outside of the viewing area 32 are occluded (made not visible to the pilot). Thus,we see in the examples 30A, 30B, 30C and 30D the altitude symbology as it would appear to the pilot at four discrete altitudes, zero, fifty, one hundred and two hundred units, respectively. It will also be noted that the triangle symbols 34, 36 are occluded in the region of the digital display 40.

The triangles 34, 36 will move vertically downward as the aircraft altitude increases, and upwards as the aircraft altitude decreases. The fixed location digital display 40, which serves as the zero reference, will remain at a fixed height on the screen. Therefore, the pictorial display will appear to slide behind the digital display.

## POWER SYMBOL

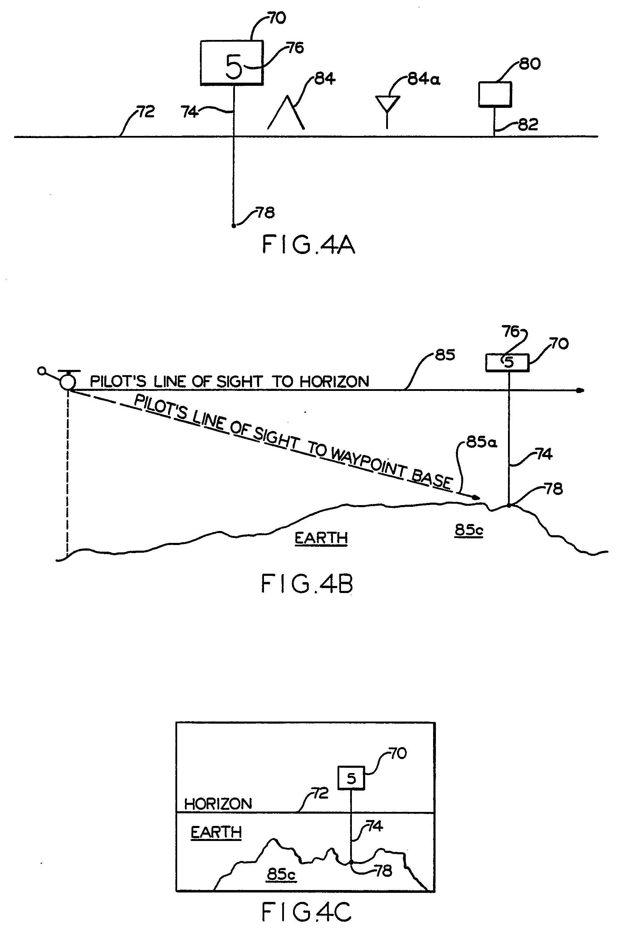

Fig. 3 shows the display associated with engine torque and, for helicopters, power available to hover. Engine torque for one or more engines may be a directly measured parameter (sensor 14 of Fig. 1), and power available to hover is typically a calculated value based on several engine operating parameters. See for example, U.S. Patent 4,467,640 (to Morrison, 1984) and copending application U.S. Serial No. 06/827,221, filed by Lappos et al.

The display format utilizes a pictorial display 50 showing various aircraft parameters. The display 50 is essentially a "thermometer." The data supporting these displays are derived from signals provided by aircraft sensors, which signals are filtered and processed to produce integrated power indications: engine torque (both digital and analog), power required to hover out of ground effect, and power available (power margin).

The thermometer has a rectangular base portion 52 containing a digital display 54 of the average torque produced by the engines as a percentage of rated torque. A vertical line symbol 56 rises up from the base portion 52 and is "fixed" in that it serves as a scale for other "moving" symbols. The top of the scale corresponds to 120% (maximum) of rated (100%) torque. The bottom of the scale corresponds to minimum (0%) engine torque.

Two opposing "arrowheads" 58 and 60 may be disposed one on either side of the scale 56 to represent the instantaneous torque of each engine (one arrowhead per engine) in an analog manner by their position along the scale. This gives a ready indication of torque "split" to the pilot, but to avoid displaying unnecessary information, the arrowheads need only be displayed whenever the difference in torque between the two engines exceeds a selected level, such as 15% or when the torque on any single engine goes out of a chosen range.

For helicopters, a right triangle symbol 62 is positioned on the scale, as shown, to represent the minimum power required to hover out of ground effect. This is a computed parameter, and the visual indication thereof is quite important to the pilot vis-a-vis the estimated power available symbol described below. As will be readily appreciated by one of ordinary skill in the art, if the power required exceeds the estimated power available, in other words if the triangle symbol rises above the estimated power available symbol described below, severe degradation of aircraft performance may occur.

The estimated power available symbol 64 is a horizontal line which presents an estimate of the maximum power available from both engines taken together, given current atmospheric conditions. This horizontal line intersects the torque scale 56, typically near the top thereof.

A solid line 66, thicker than the line 56, (i.e., the "fluid" of the "thermometer") rises upward along the line 56 from the base portion 52. This symbol 66 is an analog representation of the instantaneous estimated power setting, which is a computed parameter, and represents the power setting commanded by the pilot's collective input.

The torque scale 56 and the frame 52 around the digital display 54 are the only elements of the power display 50 that remain static. All of the other display elements move dynamically with a range of 0% and 120% of torque.

This display will offer the pilot a better, more extensive combination of pre-processed information than is currently available. For example, as long as the display shows that the power required to hover out of ground effect triangle is below the estimated power available line, the pilot will known that the aircraft is fully capable of performing any desired maneuver due to the fact that the hover out of ground effect maneuver is the most power intensive flight maneuver. In addition, the instantaneous estimated power setting display element will effectively anticipate the mechanical delay between a collective input and the actual torque change in the engines, thereby counter-balancing the loss of the proprioceptive feedback incurred due to the utilization of a modern side-arm controller.

## WAYPOINT SYMBOLOGY

Fig. 4 shows symbols indicative of "waypoints" superimposed on a horizon line. The waypoints represent one or more ground position points in a series of such points which make up benchmarks in a preselected flight plan. The earth coordinates of the flight plan waypoints would typically be entered prior to takeoff into the computer 10 of Fig. 1 via one or more of the input devices 20.

The display format may utilize a pictorial representation of two such navigational cues on a horizon line, showing both the upcoming and subsequent waypoints with respect to each other and the horizon. The horizon line may be displayed such that it remains parallel to the horizon and in-line with the horizon, from the perspective of the aircraft or the pilot.

The large rectangular flag 70 represents the upcoming (current) waypoint along the programmed flight plan. The vertical height of the flag 70 relative to the displayed horizon line 72 does not change, but the stem 74 "grows" as the waypoint gets closer and appears, from the perspective of the aircraft or the pilot, as if it were actually attached to the point it represents on the earth. The bottom of the stem 74 will has a small solid symbol 78 attached to it which remains "planted" on the same earth point. The flag has a digital display 76 which may be the waypoint's identifier or an indication of the distance to that point. The stem of the flag will always remain perpendicular to the horizon line. Changes in attitude of the referent aircraft or helmet will result in the horizon along with the flagpoles "tilting," i.e., the horizon symbol always stays with the actual horizon and the flagpoles always remain upright with respect to the horizon.

The smaller square flag 80 depicts the location of the subsequent (next) waypoint in the flight plan. Unlike the larger flag, the stem of the small flag does not grow beneath the horizon line 72. The stem 82 of the flags 72 always remains perpendicular to the horizon line. There may be, but there is preferably no digital display in the smaller flag 80.

As suggested above, the horizon and both of the waypoint symbols 70, 80 will move in various directions on the image source or display 22 surface (e.g., a CRT) proportional to the relative attitude of the aircraft alone (for heads-up displays), or the aircraft and pilot's helmet taken together (for helmet-mounted displays). The flags will therefore appear to the pilot to have been "planted" at a specific geographical location in the real-world.

In order to properly position the horizon and waypoint symbology with respect to the pilot's helmet, for a helmet-mounted display, it is necessary to conceive of the earth, the aircraft and the pilot's helmet as being associated with separate coordinate systems having separate origins freely translating and rotating with respect to one another. On the other hand, if it is only desired to position the horizon and waypoint symbology with respect to the aircraft, it is only necessary to conceive of the earth and aircraft as being associated with separate coordinate systems. The pilot is considered part of the aircraft for that case (the simple heads-up display case), i.e., his helmet position and attitude are ignored and assumed to be in a fixed position and orientation. See U.S. Patent 4,305,057 to Rolston.

Such equations can be used for the simple heads-up display case where the aircraft is the referent for imaging purposes. For the head-mounted display case, where the pilot's head is the referent, it is necessary to perform an additional set of translations and rotations. See copending application, U.S. Serial Number (Attorney Docket No. S-4170) for an example of a series of coordinate transformations (from earth to aircraft to helmet to display coordinates).

The manner in which the waypoints are retrieved may be thought of as progressing from retrieving a first waypoint position signal and identifying that signal as the current waypoint position signal until it is passed. At the same time as the first waypoint position signal is retrieved, a second waypoint position signal (next in sequence) is retrieved and identified as the subsequent waypoint position signal indicative of the position of the next waypoint in the selected flight plan after the upcoming or current waypoint.

After determining that the aircraft is within a first selected distance of the current waypoint, a determination is made as to whether the aircraft or helmet has an increasing distance between itself and the upcoming waypoint; if so, a further determination is then made as to whether or not the distance between the aircraft or helmet and the subsequent waypoint position is decreasing. If so, the subsequent waypoint is from that point on identified as the current waypoint and a third waypoint position signal is retrieved from storage and identified as the new subsequent waypoint position signal. If the aircraft comes within a second selected distance of the current waypoint (less than the first selected distance) before it is determined that both the distance to the current waypoint is increasing and the distance to the next waypoint is decreasing, the identity of the current waypoint is at that point automatically changed to that of the next waypoint. The same process is continued until the destination is reached. Such a procedure is described in more detail in copending application U.S. Serial No. (Attorney Docket No. S-4170).Copy is enclosed)

## STEERING CUE SYMBOL

Fig. 4 also shows a steering cue display 84 which operates in conjunction with the waypoint display.

The purpose of the waypoint flags 70, 80 is to indicate to a pilot the real world location of the current waypoint (the one being flown to) and the next waypoint. These flags occupy their real world positions with respect to the horizon line both in azimuth and distance from the aircraft. The distance from the aircraft is indicated by the waypoint flag pole growing larger as the aircraft approaches the waypoint.

The purpose of the steering cue 84 is to aid the pilot in reaching the current waypoint. If the aircraft's position is off the flight leg (the straight line connecting the last and current waypoints), the steering cue directs the pilot to return to the flight leg in a gradual and smooth manner (not to fly directly at the waypoint). An algorithm and corresponding illustrative example are disclosed so as to enable one of ordinary skill in the art to implement the steering cue display via appropriate software in the computer 10 of Fig. 1.

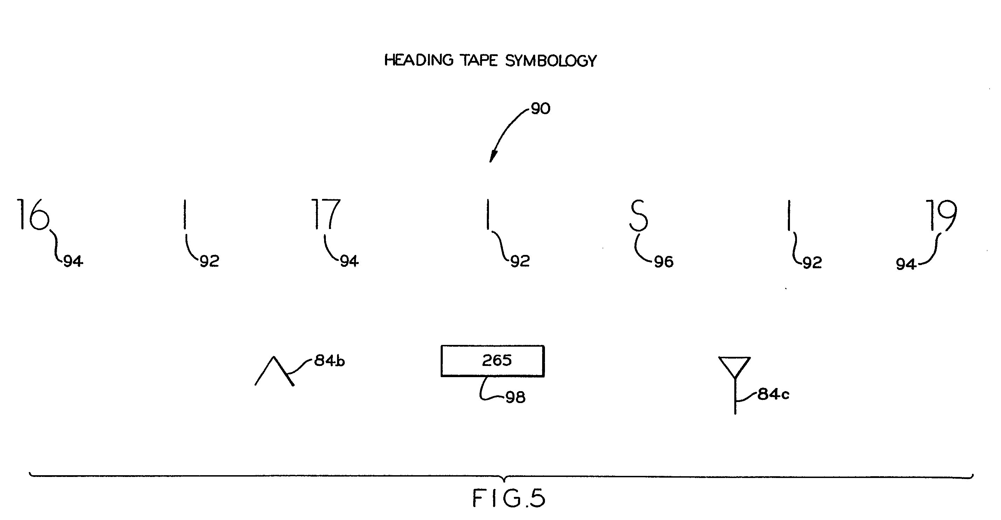

Thus, the image of the steering cue may be provided to the pilot in order to indicate an aircraft heading consistent with following the preselected flight plan to the current waypoint or, in some cases, the next waypoint. The steering cue may be presented in close proximity to and with respect to the horizon as shown by symbol 84 in Fig. 4 or a helmet compass bearing symbol as shown by a symbol 84b in Fig.5. (As shown in Figs. 4 & 5, the steering cue may take the form of a carat-shaped symbol which moves horizontally just below a compass heading symbol which the pilot may follow.) In either event, the carat symbol may, for example,also have 3 possible orientations: if the direction-to-steer is within plus or minus a selected number of degrees (e.g., 19 degrees) of the vertical centerline of the pilot's field of view, then the carat points upward, as shown in Figs. 4 &5; if the direction-to-steer is beyond plus or minus the selected range then the carat will rotate to either point left or right to cue the pilot which way to turn to bring the carat within the selected range.

The steering cue may be provided so as to guide the pilot back on the current flight leg as disclosed above or, upon closely approaching a current waypoint where the next flight leg will shortly be in a different direction,to guide the pilot so as to enable him to turn the "corner" in a smooth manner. An aircraft symbol 84a may be provided as shown in Fig. 4 in conjunction with the steering cue symbol 84 to indicate the current heading of the aircraft with respect to the horizon or, as shown by a symbol 84c in Fig. 5, the helmet compass bearing symbol.

The algorithm first determines, as described above in connection with the separate description of the waypoint symbology, when the aircraft has "passed" the current waypoint and the waypoints (past, current, and next) are updated.

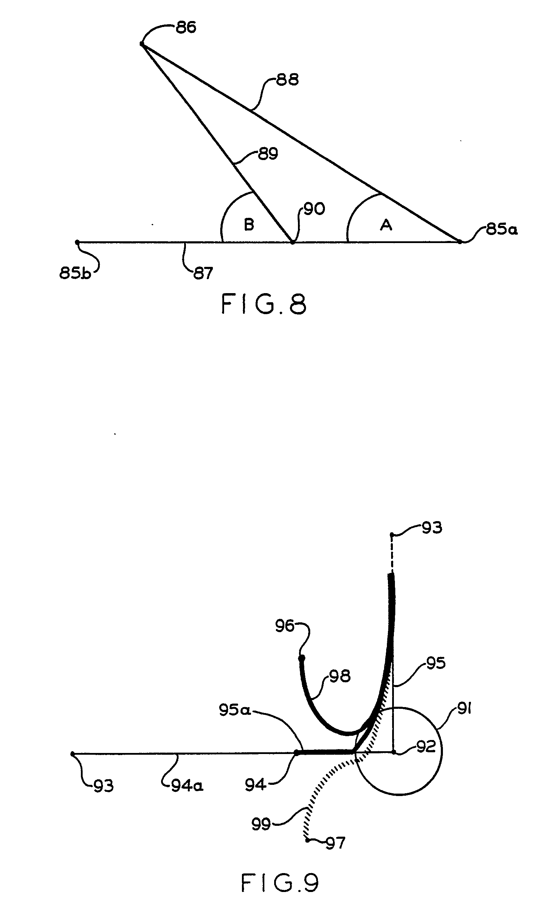

Referring first to Fig. 8, a point 85a corresponds to the position on the ground of a current waypoint and a point 85b represents the last waypoint. A point 86 corresponds to the present position of the aircraft. An angle A measures the angle between a flight plan path 87 and a line 88 from the current aircraft position to the current waypoint. An angle B is indicative of the angle between the path 87 and a line 89 projected from point 86 in the direction to be indicated by the steering cue, intersecting line 87 at a point 90.

The algorithm is to set angle B equal to the arctan of a constant times tanA. The constant will most advantageously be set to a value between 1.5 and 3.

For cases where the aircraft is closely approaching the current waypoint, it will be desirable to change the identity of the current waypoint, for purposes of the steering cue only, so that an efficient "corner" may be turned. In other words, the current waypoint continues to be imaged until its identity is changed in the normal way, described previously. Some typical cornering paths to the next waypoint for a plan having a right angle turn using this algorithm are shown in Fig. 9. A circle 91 indicates a selected distance for changing the identity, for steering cue purposes only, of a current waypoint 92 to that of the last waypoint and that of a next waypoint 93 to that of the current waypoint. Fig. 9 also illustrates a waypoint 93 which preceded waypoint 92 in the flight plan. Starting with an aircraft position 94 on a preplanned flight path 94a between points 93 and 92, the aircraft will trigger a change, for steering cue purposes only, in the identity of the current waypoint from point 92 to point 93 once it is within radius 91. At that time it is now off of the preplanned flight plan along a path 95. The algorithm will cause the steering cue 84 to smoothly steer the pilot back onto the path 95 along a path 95a shown with a heavy line. Two other examples show starting positions 96, 97 resulting in flights along paths 98, 99, respectively, onto the new flight path 95. It will be noted in all cases that the crossover of the circle 91 causes a change in course due to the change in identity of the next waypoint.

Aside from cornering, the purpose of the steering cue symbol is to direct the pilot back to the straight line path ("leg") between two successive waypoints (the previous waypoint and the current waypoint) when he has deviated therefrom. This will always place the pilot back on the prescribed leg of his mission in a smooth manner.

Fig. 4B is a stylized illustration of a pilot's line of sight 85 to the horizon symbol 72 of Fig. 4A. It also illustrates the pilot's line of sight 85a to the base 78 of symbolic waypoint image 70, 74, 76. A rise in an undulating earth 85c is shown in section with the waypoint base 78 coincident with a point thereon, which may be a waypoint such as point 108 in an earth coordinate system illustrated in Fig. 8 of copending application (Attorney Docket No.: S-4170). Similarly, Fig. 4C stylistically illustrates the same scene from the pilot's point-of-view, as presented by the display with the horizon symbol 72 and waypoint symbol 70, 74, 78 shown.

## HEADING SYMBOLOGY

Fig. 5 shows a display combining both aircraft heading/track angles (sensor 12 of Fig. 1) and off-aircraft axis targeting/sighting information such as helmet pointing angle (sensor 18 of Fig. 1).

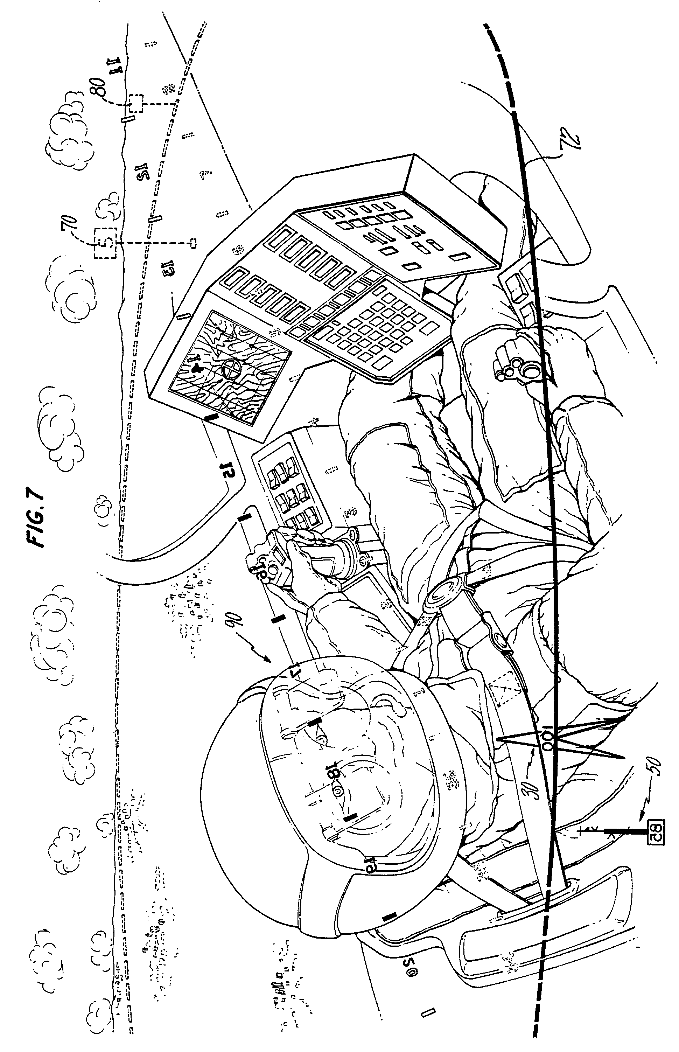

The heading tape symbol 90 consists of a full 360 degree circle in a horizontal plane such that as the pilot turns his head he sees the portion of the heading tape that corresponds to his line of sight. In the example of Fig. 5, the display shows 160 degrees (16) to 190 degrees (19). The symbol tape 90 may be set up so as to remain fixed in terms of its screen location so that it always remains parallel to the upper edge of the displayed area. As shown in Fig. 7, for example, the pilot has his head turned to his right tilted upwardly such that the tape symbology within his field of view (shown with solid symbols) appears in the upper portion of his field of view no matter which way he turns his head. Thus, the tape symbology "sticks" with the pilot's head. This is suggested by a nondisplayed portion of a circular tape shown in nonsolid symbols (in front) and phantom symbols (to the rear) encircling the pilot's head and which more clearly suggests the tilted orientation of the tape symbology with respect to the horizon symbology. It has a one-to-one correlation with the real-world direction in that a change in either aircraft or helmet heading corresponds to an equivalent change in the displayed portion of the heading tape. It should be realized, however, that the tape symbology could be presented in-line or parallel with the horizon at all times.

The display consists of tick marks 92 every 10 degrees with numerical indicators 94 replacing the tick marks at every heading divisible by 10. These numerical indicators are 2-digit numbers showing the left-most digits (heading 030 is displayed as 03). The Cardinal headings may be replaced by their representative letter 96 (N, S, E and W) as shown in Fig. 5, or may be shown in the same way as all other directions (see Fig. 7). The heading tape symbol 90 is augmented by a digital display 98 showing the current aircraft heading. In this example, the pilot is looking almost due south (175 degrees), and the aircraft is flying almost due west (265 degrees).

The entire moving scale rotates horizontally in an opposite direction but at an equivalent rate as any change in aircraft or pilot-helmet heading. The portion of the scale not being displayed is held in memory until the pilot moves his head as suggested by the nonsolid and phantom symbols shown out of the pilot's field of view in Fig. 7.

The aircraft symbol 84c indicates the aircraft's current heading with respect to the heading tape and may be used in conjunction with the steering cue 84b, e.g., to get back on a leg of a flight plan.

This display allows the pilot to acquire earthplane angular information more quickly and with less cognitive processing than is currently required.

## HELMET POINTING ANGLE SYMBOLOGY

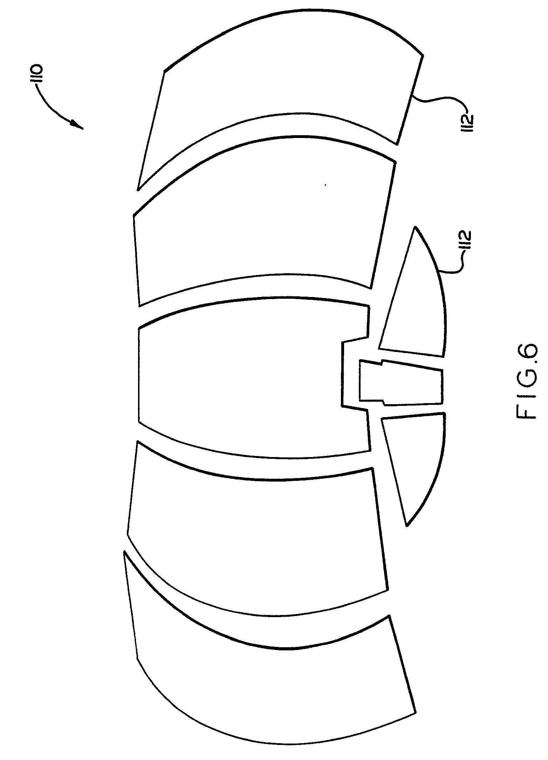

Fig. 6 shows a helmet pointing angle display symbolic image which may be used as a helmet pointing angle reference to the pilot, for example, while using night vision goggles or any targeting/sighting system that is directed by a helmet tracking system such as a forward-looking infrared (FLIR) imaging system. This type of display differs from the Heading Display, in that it provides the pilot with a cue as to where he is facing within the cockpit itself rather than outside of the cockpit, but the two types of display techniques work well together. The Helmet Pointing Angle Display provides the pilot with a nearly reflexive cue as to where he is looking within the cockpit during nighttime operations without the need for cognition on his part.

The display provides, e.g., a pictorial display 110 depicting a cockpit structure (window frames and instrument consoles) as it would be seen from the pilot's eye-reference point. These are depicted as the heavy lines 112. Only that portion of the display representing the cockpit structure which is within the pilot's field-of-view is presented.

The display reference symbology will always overlay its real-world cockpit structure counterpart.

This display will allow the pilot to acquire, under night or low visibility conditions, targeting/sighting information more quickly and with less cognitive processing than is currently required. This display concept will allow the pilot to readily perceive the current line of sight (helmet pointing angle) because of the increase in information transfer and relevance.

This display technique may also be used for other symbolic images which may also be presented in fixed relation to the cockpit or aircraft, regardless of the position and attitude of the helmet with respect to the cockpit, but which, for example, may not necessarily have any direct relation to physical objects or structures in the cockpit.

## OVERALL DISPLAY

Fig. 7 shows the altitude display of Fig. 2, the power display of Fig. 3, the waypoint and steering cue displays of Fig. 4, and the heading display of Fig. 5, as they would (aggregately) appear to a pilot on the eyepiece of a helmet mounted display system. Not shown is the helmet pointing angle display of Fig. 6 or the velocity/acceleration symbol of Fig. 12.

It should be understood that other symbols could be substituted for the various symbols described without detracting from the cognitive efficiency of the display symbology herein. In addition, other symbolic imagery can be provided as well.

## VELOCITY/ACCELERATION SYMBOL

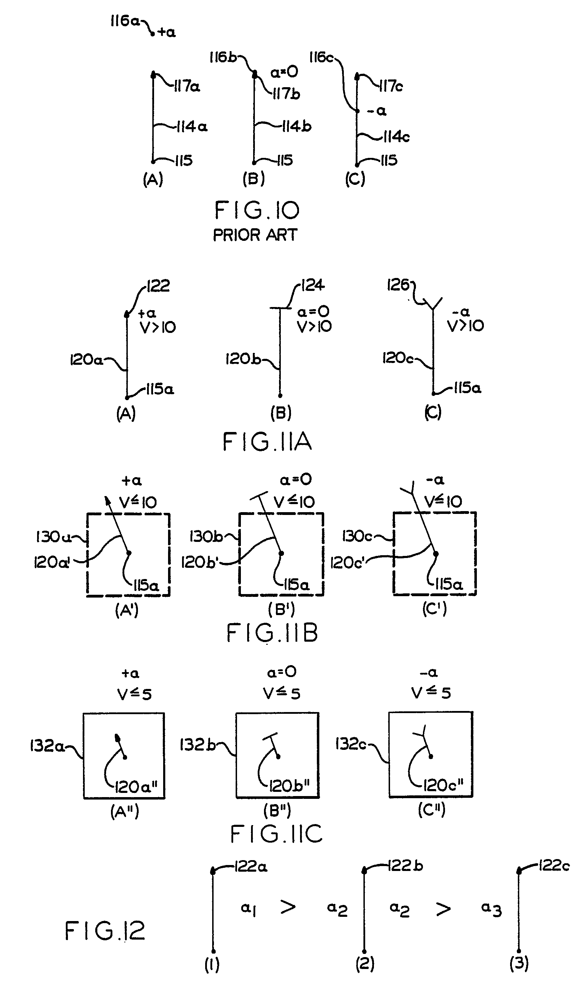

Most aircraft do not provide a cue for horizontal velocity information to a pilot when operating at low speed and the pilot must interpret the visual scene to estimate the direction, magnitude, and rate of change of magnitude (acceleration or deceleration) of the vehicle's velocity. One helmet-mounted display and several panel mounted display techniques incorporate a velocity vector (denoted generally by a numeral 114) such as is illustrated in Fig. 10 which emanates from the center of the display at a point 115. It includes an acceleration dot (denoted generally by a numeral 116) which is used to indicate the direction and magnitude of horizontal acceleration by its position relative to the center of the display. An arrowhead (denoted generally by a numeral 117) is attached to the end of the velocity vector 114. Thus, for Fig. 10(A), a positive acceleration is indicated by a point 116a in the direction of a velocity vector 114a. For Fig. 10(B), the acceleration is zero and a velocity vector 114b is indicating a constant velocity. In that case, a dot 116b coincides with an arrowhead 117b which is used at the end of the velocity vector.

With this information, according to the prior art, the pilot determines the control inputs required to achieve the desired velocity state. A stationary hover task requires the pilot to cancel any velocity, and the precision of the hover point is determined by the pilot's ability to recognize and correct velocity changes quickly and accurately.

The pilot's ability to interpret visual data from outside the cockpit is dependent on many factors including external cockpit visibility, surface conditions, level of ambient brightness (day, night, dusk) and existence of obscurants are some examples. Rotorwash during landing and hover in remote areas often causes heavy obscurants (dust, snow) to visibility. Some missions may call for flight in poor visibility conditions. When the visual scene cannot be interpreted, the pilot must rely on artificial cues or lose control of the aircraft. The prior art symbology is helpful but not completely informative because of the lack of quantitative information and the absence of a correlation between the velocity vector and the acceleration cue.

Referring now to Figs. 11A-11C, the length of a velocity vector (denoted generally by a numeral 120 with various suffixes) changes proportionally to the magnitude of the velocity of the aircraft. The direction of the vector relative to the vertical axis of the display indicates the direction of the vehicle velocity relative to its longitudinal axis. The acceleration or deceleration of the aircraft, i.e., the rate of change of the velocity vector may be perceived in a gross fashion by observing changes in the magnitude of the velocity vector. However, this requires the pilot to view the symbol for a relatively long period of time. Therefore, for instant cognition, velocity rate of change may also be indicated by a acceleration arrowhead with special features, according to the present invention. When the velocity is increasing, as shown in Fig. 11A(A) an arrowhead 122 points away from a point 115a. Diminishing velocity is indicated in Figs. 11A(C) by an arrowhead 126 pointing toward point 115a. A constant velocity is indicated in Fig. 11A(B) by a flat acceleration cue making a velocity vector arrowhead 124 appear as a "T".

The magnitudes of the velocity vectors 120a, 120b, 120c of Figs. 11A(A), (B) and (C) all have about the same magnitude, being greater than a selected magnitude, such as 10 knots.

Referring now to Fig. 11B, again, three different velocity rates of change are shown in Figs. 11B-(A$'$), 11(B$'$) and 11(C$'$). All three cases have approximately the same magnitude velocity vectors 120a$'$ which is less than the selected value of 10 knots. Upon reaching a velocity less than the selected velocity of 10 knots, a symbol 130 having dashed lines appears surrounding the point 115. Although illustrated as a box, the symbol may also be a circle, or some other convenient shape and indicates, approximately, a velocity of, for example, 5 knots. Thus, if the magnitude of the velocity vector 120a$'$ is reduced in size so as to coincide with the edges of the box 130a then the pilot will know that the aircraft is traveling at about 5 knots. Velocity vectors slightly longer or shorter than the boundaries of the symbol 130 can be easily mentally estimated by the pilot in magnitude in analog fashion.

It will be observed that the velocity symbols 120a$'$, 120b$'$, and 120c$'$ of Figs. 11B(A$'$), (B$'$), and (C$'$), respectively, are all tilted to the left, indicating to the pilot that the horizontal component of the aircraft's velocity is off to the left of the longitudinal axis of the aircraft.

Figs. 11C(A$''$), 11C(B$''$), and 11C(C$''$) are similar to Figs. 11B(A$'$), 11B(B$'$), and 11B(C$'$) in that the velocity vectors are pointing in the same direction for the same three types of rates of change (i.e., acceleration, constant velocity and deceleration, respectively). However, the magnitude of velocity vectors 120a$''$, 120b$''$, 120c$''$ has become, relatively speaking, very small. In fact, they are lesser in magnitude than another selected value, e.g., 5 knots, at which point the dashed lines 130 become solid lines 132a, 132b, 132c. This technique may be used thusly to indicate that a hover hold system has become active at less than, e.g., the selected value of 5 knots.

Fig. 12 illustrates how the arrowhead 122 may be altered for different magnitudes of acceleration in a more-or-less continuous manner. For example, Fig. 12(1) shows the arrowhead 122a at an acceleration value $a_1$ which is greater than an acceleration value $a_2$ shown in Fig. 12(2). It will be noted that the arrowhead 122a assumes an extreme acute angle while the arrowhead 122b of Fig. 12(2) forms almost a right angle. Similarly, for Fig. 12(3) the arrowhead 122c forms an obtuse angle where acceleration value $a_2$ is greater than acceleration value $a_3$. Thus, as the rate of change of velocity increases, the angle of the acceleration cue "ears" or "wings" get more acute. The same principle may be used for decelerations with the degree of acuteness also indicating high absolute values of rate of change and with the degree of obtuseness indicating low absolute values of rate of change in velocity.

Since the cue is generated by sensor data and may always be presented on the display, it never degrades in operational conditions and interpretation of speed and acceleration are much improved over previous systems. Of course, the values applied to trigger the scale boxes could be changed according to mission requirements. For example, a mine sweeping tow mission that requires constant velocity could have a two rectangular boxes inside one another indicating velocity tolerances.

Although the invention has been shown and described with respect to a best mode embodiment thereof, it should be understood by those skilled in the art that the foregoing and various other changes, omissions, and additions in the form and detail thereof maybe made therein without departing from the spirit and scope of the invention.

## Claims

1. A helmet mounted display system for displaying images to a pilot in an aircraft cockpit, comprising:
sensor means, responsive to the attitude of the helmet with respect to a cockpit coordinate system, for providing a helmet attitude signal indicative thereof;
signal processing means, responsive to said helmet attitude signal for retrieving stored signals indicative of points within the cockpit coordinate system which are within the field of view of the pilot as indicated by said helmet attitude signal, said signal processing means also responsive to said helmet attitude signal, for converting said retrieved signals from said cockpit coordinate system to a helmet coordinate system and from said helmet coordinate system to a display coordinate system and for providing converted retrieved signals for display; and
means for providing to the pilot, in response to said converted retrieved signals, symbolic images of said cockpit points such that said symbolic images coincide, from said pilot's point of view, with said cockpit points.

2. A helmet related display method for providing symbolic images to a pilot in a cockpit, comprising the steps of:
sensing the attitude of the helmet with respect to a cockpit coordinate system and providing a helmet attitude signal indicative thereof;
retrieving, in response to said helmet attitude signal, a plurality of stored cockpit signals indicative of points within a cockpit coordinate system which are within the field of view of the pilot;
converting, in response to said helmet attitude signal, said plurality of cockpit signals into a corresponding plurality of helmet signals indicative of said points in a helmet coordinate system;
providing, in response to said helmet signals, a corresponding plurality of display signals indicative of said points in a helmet display coordinate system;
and
providing, in response to said display signals, one or more symbolic images of one or more corresponding points in the cockpit which are within the pilot's field of view, said symbolic images being provided so as to coincide, from the point of view of the pilot, to the actual positions in the cockpit of said points, regardless of the helmet's attitude with respect to the aircraft.

FIG.1

DISPLAY — 22

COMPUTER — 10

⑫  ⑭  ⑯  ⑱  ⑳

— 50

64

56

62

60

58

66

52

85  54

FIG.3

FIG.2

30A · 34 · 36 · 40 · 38 · 32

30B · 34 · 36 · 40 · 38 · 50 · 32

30C · 34 · 40 · 38 · 100 · 36 · 32

30D · 40 · 38 · 200 · 34 · 32 · w · h

EP 0 330 147 A2

FIG.4A

PILOT'S LINE OF SIGHT TO HORIZON

PILOT'S LINE OF SIGHT TO WAYPOINT BASE

EARTH

FIG.4B

HORIZON

EARTH

FIG.4C

HEADING TAPE SYMBOLOGY

16 ⌐94    | ⌐92    17 ⌐94    | ⌐92    S ⌐96    | ⌐92    19 ⌐94

⋀ ⌐84b    | 265 | ⌐98    ▽ ⌐84c

FIG.5

EP 0 330 147 A2

FIG.6

EP 0 330 147 A2

FIG.7

FIG.8

FIG.9

FIG.10
PRIOR ART

FIG.IIA

FIG.IIB

FIG.IIC

FIG.12